(19) Europäisches Patentamt
European Patent Office
Office européen des brevets

(11) **EP 4 583 052 A1**

(12) **EUROPEAN PATENT APPLICATION**
published in accordance with Art. 153(4) EPC

(43) Date of publication:
**09.07.2025 Bulletin 2025/28**

(21) Application number: **23881383.6**

(22) Date of filing: **08.08.2023**

(51) International Patent Classification (IPC):
**G06T 7/80** (2017.01)          **G06T 7/73** (2017.01)

(86) International application number:
**PCT/CN2023/111752**

(87) International publication number:
**WO 2024/087797 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.10.2022 CN 202211305842**

(71) Applicants:
• **ZHEJIANG ZEEKR INTELLIGENT TECHNOLOGY
CO., LTD.**
**Ningbo, Zhejiang 315899 (CN)**

• **Zhejiang Geely Holding Group Co., Ltd.**
**Hangzhou, Zhejiang 310000 (CN)**

(72) Inventors:
• **ZHOU, Jun**
**Ningbo, Zhejiang 315000 (CN)**
• **YU, Yiming**
**Ningbo, Zhejiang 315000 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

(54) **LINE-OF-SIGHT DIRECTION DATA COLLECTION METHOD, APPARATUS AND DEVICE, AND STORAGE MEDIUM**

(57)     Disclosed are a method for collecting line-of-sight direction data, an apparatus, a device and a storage medium. The method includes: collecting an object image of a target object through a first depth camera, and determining an object three-dimensional coordinate of the target object under a first depth camera coordinate system based on the object image, the target object is an object a user stares at; collecting a facial image of the user through a second depth camera, and determining an eye three-dimensional coordinate of the user under a second depth camera coordinate system based on the facial image; determining an object coordinate of the object three-dimensional coordinate and an eye coordinate of the eye three-dimensional coordinate under each collection camera coordinate system; and determining line-of-sight direction data of the user based on the object coordinate and the eye coordinate under each collection camera coordinate system.

collecting the object image of the target object through the first depth camera, and determining the object three-dimensional coordinate of the target object under the first depth camera coordinate system based on the object image, and the target object is the object the user stares at — S10

collecting the facial image of the user through the second depth camera, and determining the eye three-dimensional coordinate of the user's eye under the second depth camera coordinate system based on the facial image — S20

determining the object coordinate of the object three-dimensional coordinate and the eye coordinate of the eye three-dimensional coordinate under each collection camera coordinate system — S30

determining the line-of-sight direction data of the user based on the object coordinate and the eye coordinate under each collection camera coordinate system — S40

FIG. 2

**EP 4 583 052 A1**

**Description**

**CROSS-REFERENCE TO RELATED APPLICATIONS**

The present application claims priority to Chinese Patent Application No. 202211305842.9, filed on October 24, 2022, the entire contents of which are incorporated herein by reference.

**TECHNICAL FIELD**

The present application relates to the technical field of data collection, and in particular to a method for collecting line-of-sight direction data, an apparatus, a device and a storage medium.

**BACKGROUND**

The existing line-of-sight direction data collection scheme generally uses a single collection method, and can only collect one line-of-sight direction data at one time, which has a low data collection efficiency and cannot meet the training requirements of the depth learning algorithm. In addition, due to the field angle of the depth camera, there are great restrictions on the location of data collection, and the collected line-of-sight direction data has a low accuracy.
The above content is only intended to assist in understanding the technical solution of the present application, and does not mean that the above content is recognized as prior art.

**SUMMARY**

The main purpose of the present application is to provide a method for collecting line-of-sight direction data, an apparatus, a device and a storage medium, aiming to solve the technical problems of low efficiency and low accuracy of the line-of-sight direction data collection in the related art.
To achieve the above purpose, the present application provides a method for collecting line-of-sight direction data, including the following steps:

collecting an object image of a target object through a first depth camera, and determining an object three-dimensional coordinate of the target object under a first depth camera coordinate system based on the object image, the target object is an object a user stares at;

collecting a facial image of the user through a second depth camera, and determining an eye three-dimensional coordinate of the user under a second depth camera coordinate system based on the facial image;

determining an object coordinate of the object three-dimensional coordinate and an eye coordinate of the eye three-dimensional coordinate under each collection camera coordinate system; and

determining line-of-sight direction data of the user based on the object coordinate and the eye coordinate under each collection camera coordinate system.

In an embodiment, the determining the object coordinate of the object three-dimensional coordinate and the eye coordinate of the eye three-dimensional coordinate under each collection camera coordinate system includes:

in response to that the first depth camera coordinate system is unified with the second depth camera coordinate system, determining the object coordinate of the object three-dimensional coordinate under each collection camera coordinate system based on an external parameter matrix from the first depth camera coordinate system to each collection camera coordinate system; and

determining the eye coordinate of the eye three-dimensional coordinate under each collection camera coordinate system based on an external parameter matrix from the second depth camera coordinate system to each collection camera coordinate system.

In an embodiment, the determining the object coordinate of the object three-dimensional coordinate and the eye coordinate of the eye three-dimensional coordinate under each collection camera coordinate system further includes:

in response to that the first depth camera coordinate system is not unified with the second depth camera coordinate system, determining an object calibration three-dimensional coordinate of the object three-dimensional coordinate under a first preset calibration plate coordinate system based on the external parameter matrix from the first depth camera coordinate system to the first preset calibration plate coordinate system;

determining an eye calibration three-dimensional coordinate of the eye three-dimensional coordinate under the first preset calibration plate coordinate system based on the external parameter matrix from the second depth camera coordinate system to the first preset calibration plate coordinate system; and

determining an object coordinate of the object calibration three-dimensional coordinate and an eye coordinate of the eye calibration three-dimensional coordinate under each collection camera coordinate system based on an external parameter matrix from the first preset calibration plate coordinate system to each collection camera coordinate system.

In an embodiment, before the determining the object coordinate of the object three-dimensional coordinate and the eye coordinate of the eye three-dimensional coordinate under each collection camera coordinate system, the method further includes:

determining a first external parameter matrix from the first depth camera coordinate system to a second preset calibration plate coordinate system, and determining a second external parameter matrix from the second depth camera coordinate system to the second preset calibration plate coordinate system;

determining a first three-dimensional object coordinate of a target reference object under the first depth camera coordinate system, and determining a second three-dimensional object coordinate of the target reference object under the second depth camera coordinate system; and

determining whether the first depth camera coordinate system is unified with the second depth camera coordinate system based on the first three-dimensional object coordinate, the second three-dimensional object coordinate, the first external parameter matrix and the second external parameter matrix.

In an embodiment, the determining the first three-dimensional object coordinate of the target reference object under the first depth camera coordinate system, and determining the second three-dimensional object coordinate of the target reference object under the second depth camera coordinate system includes:

collecting a first reference object image of the target reference object through the first depth camera, and determining the first three-dimensional object coordinate of the target reference object under the first depth camera coordinate system based on the first reference object image; and

collecting a second reference object image of the target reference object through the second depth camera, and determining the second three-dimensional object coordinate of the target reference object under the second depth camera coordinate system based on the second reference object image.

In an embodiment, the determining whether the first depth camera coordinate system is unified with the second depth camera coordinate system based on the first three-dimensional object coordinate, the second three-dimensional object coordinate, the first external parameter matrix and the second external parameter matrix includes:

transforming the first three-dimensional object coordinate to a first object coordinate under the second preset calibration plate coordinate system based on the first external parameter matrix;

transforming the second three-dimensional object coordinate to a second object coordinate under the second preset calibration plate coordinate system based on the second external parameter matrix;

in response to that the first object coordinate is consistent with the second object coordinate, determining that the first depth camera coordinate system is unified with the second depth camera coordinate system; and

in response to that the first object coordinate is inconsistent with the second object coordinate, determining that the first depth camera coordinate system is not unified with the second depth camera coordinate system.

In an embodiment, the determining the line-of-sight direction data of the user based on the object coordinate and the eye coordinate under each collection camera coordinate system includes:

> determining a line-of-sight vector under each collection camera coordinate system based on the object coordinate and the eye coordinate under each collection camera coordinate system; and

> determining the line-of-sight direction data of the user based on the line-of-sight vector under each collection camera coordinate system.

In addition, in order to realize the above objective, the present application also provides an apparatus for collecting line-of-sight direction data, including:

> a first coordinate determining module configured to collect an object image of a target object through a first depth camera, and determine an object three-dimensional coordinate of the target object under a first depth camera coordinate system based on the object image, the target object is an object a user stares at;

> a second coordinate determining module configured to collect a facial image of the user through a second depth camera, and determine an eye three-dimensional coordinate of the user under a second depth camera coordinate system based on the facial image;

> a third coordinate determining module configured to determine an object coordinate of the object three-dimensional coordinate and an eye coordinate of the eye three-dimensional coordinate under each collection camera coordinate system; and

> a direction data determining module configured to determine line-of-sight direction data of the user based on the object coordinate and the eye coordinate under each collection camera coordinate system.

In addition, in order to realize the above objective, the present application also provides a device for collecting line-of-sight direction data, including: a memory, a processor, and a line-of-sight direction data collection program stored in the memory and executable on the processor, the line-of-sight direction data collection program is configured to implement steps of the method for collecting line-of-sight direction data.

In addition, in order to realize the above objective, the present application also provides a storage medium, a line-of-sight direction data collection program is stored on the storage medium, and when the line-of-sight direction data collection program is executed by a processor, steps of the method for collecting line-of-sight direction data are implemented.

In the present application, the object image of the target object is collected through the first depth camera, and the object three-dimensional coordinate of the target object under the first depth camera coordinate system is determined based on the object image. The target object is the object which the user stares at. The facial image of the user is collected through the second depth camera, and the eye three-dimensional coordinate of the user under the second depth camera coordinate system is determined based on the facial image. The object coordinate of the object three-dimensional coordinate and the eye coordinate of the eye three-dimensional coordinate under each collection camera coordinate system are determined. The line-of-sight direction data of the user is determined based on the object coordinate and eye coordinate under each collection camera coordinate system. In the present application, the object image of the target object and the facial image of the user are respectively collected through the first depth camera and the second depth camera, and the object three-dimensional coordinate and the eye three-dimensional coordinate are determined based on the object image and the facial image. The object three-dimensional coordinate and the eye three-dimensional coordinate are transformed to each collection camera coordinate system, the object coordinate and the eye coordinate are obtained, and the line-of-sight direction data is determined based on the object coordinate and the eye coordinate under each collection camera coordinate system, so that the line-of-sight range of the collection is increased to make the line-of-sight direction data more accurate, and a plurality of line-of-sight direction data can be collected each time, thereby improving the efficiency of collecting the line-of-sight direction data.

## BRIEF DESCRIPTION OF THE DRAWINGS

> FIG. 1 is a schematic structural diagram of a device for collecting line-of-sight direction data of a hardware operating environment according to an embodiment of the present application.

FIG. 2 is a flowchart of a method for collecting line-of-sight direction data according to a first embodiment of the present application.

FIG. 3 is a schematic diagram of collecting line-of-sight direction data in the method for collecting line-of-sight direction data according to the first embodiment of the present application.

FIG. 4 is a flowchart of the method for collecting line-of-sight direction data according to a second embodiment of the present application.

FIG. 5 is a schematic diagram of shooting a first preset calibration plate through a camera in the method for collecting line-of-sight direction data according to an embodiment of the present application.

FIG. 6 is a flowchart of the method for collecting line-of-sight direction data according to a third embodiment of the present application.

FIG. 7 is a schematic diagram of shooting a second preset calibration plate through the camera in the method for collecting line-of-sight direction data according to an embodiment of the present application.

FIG. 8 is a schematic diagram of shooting a target reference object through the depth camera in the method for collecting line-of-sight direction data according to an embodiment of the present application.

FIG. 9 is a structural block diagram of an apparatus for collecting line-of-sight direction data according to an embodiment of the present application.

The realization of the objective, functional characteristics, and advantages of the present application are further described with reference to the accompanying drawings.

## DETAILED DESCRIPTION OF THE EMBODIMENTS

It should be understood that the specific embodiments described herein are only intended to explain the present application and are not intended to limit the present application.

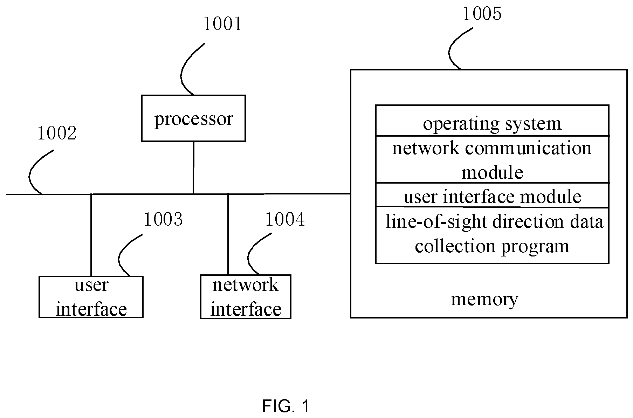

Referring to FIG. 1, FIG. 1 is a schematic structural diagram of a device for collecting line-of-sight direction data of a hardware operating environment involved in an embodiment of the present application.

As shown in FIG. 1, the device for collecting line-of-sight direction data may include: a processor 1001, such as a central processing unit (CPU), a communication bus 1002, a user interface 1003, a network interface 1004, and a memory 1005. The communication bus 1002 is configured to realize the connection and communication among these components. The user interface 1003 may include a display, an input unit such as a keyboard, and the user interface 1003 may also include a standard wired interface and a wireless interface. The network interface 1004 may include a standard wired interface and a wireless interface (such as a wireless fidelity (Wireless-Fidelity, WI-FI) interface). The memory 1005 may be a high-speed random access memory (RAM) or a stable non-volatile memory (NVM), such as a disk memory. The memory 1005 may also be a storage apparatus independent of the processor 1001.

Those skilled in the art may understand that the structure shown in FIG. 1 does not constitute a limitation on the device for collecting line-of-sight direction data, which may include more or fewer components than shown in the drawing, or combine certain components, or arrange components differently.

As shown in FIG. 1, the memory 1005, as a storage medium, may include an operating system, a network communication module, a user interface module, and a line-of-sight direction data collection program.

In the device for collecting line-of-sight direction data shown in FIG. 1, the network interface 1004 is mainly configured to communicate data with the network server; the user interface 1003 is mainly configured to interact data with the user; and the processor 1001 and the memory 1005 in the device for collecting line-of-sight direction data of the present application can be provided in the device for collecting line-of-sight direction data. The device for collecting line-of-sight direction data is configured to call the line-of-sight direction data collection program stored in the memory 1005 through the processor 1001, and execute the method for collecting line-of-sight direction data provided in the embodiment of the present application.

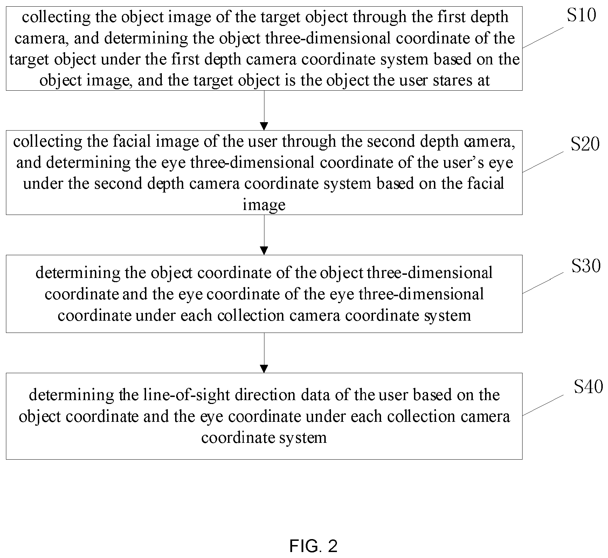

The embodiment of the present application provides a method for collecting line-of-sight direction data. Referring to FIG. 2, FIG. 2 is a flowchart of a method for collecting line-of-sight direction data according to a first embodiment of the present application.

In this embodiment, the method for collecting line-of-sight direction data includes the following steps:

Step S10: collecting the object image of the target object through the first depth camera, and determining the object three-dimensional coordinate of the target object under the first depth camera coordinate system based on the object image, and the target object is the object the user stares at.

It should be noted that the execution subject of this embodiment can be a computing service device with data processing, network communication and program running functions, such as a tablet computer, a personal computer, a mobile phone, etc., or an electronic device capable of realizing the above functions, a device for collecting line-of-sight direction data, etc. **The** following takes the device for collecting line-of-sight direction data (collection device for short) as an example to illustrate this embodiment and the following embodiments.

It can be understood that the depth cameras configured to collect the object image of the target object are collectively referred to as the first depth camera, and one or a plurality of the first depth cameras can be provided. The object three-dimensional coordinate can be the three-dimensional coordinate of the target object the user stares at in the object image under the first depth camera coordinate system. The first depth camera can automatically obtain the three-dimensional coordinate of the target object in the image after shooting the object image. The number of target objects can be more than one, and the target object can be an object provided on the background plate, or a light spot or other object projected on the background plate by the laser apparatus, which is not limited in this embodiment.

In this embodiment, the object provided on the background plate for the user to stare can also be called as a staring point. The staring point can be fixed on the background plate, the depth image of the background plate can be collected through the first depth camera, and the object three-dimensional coordinate of each staring point on the background plate can be determined in advance based on the depth image. When performing the line-of-sight direction data collection, the target staring point the user stares at can be determined, and the object three-dimensional coordinate corresponding to the target staring point can be determined based on the pre-determined object three-dimensional coordinate. Since the existing collection scheme generally adopts a moving staring point, each picture in the collection needs to be coordinate calibrated, which takes a long time. This scheme adopts a fixed staring point, so that the coordinate of the staring point in each picture of the first depth camera collection is fixed, the coordinate of the staring point only needs to be calibrated once, and the subsequent data can directly reuse, which realizes the automatic coordinate annotation and reduce the time spent on data annotation. The staring point in this embodiment may also be a moving staring point. When collecting the line-of-sight direction data, the target staring point is collected through the first depth camera, so that the line-of-sight range of the collection is wider and the collected line-of-sight direction data is richer, thereby improving the accuracy of subsequent depth learning algorithm training. Whether the object provided on the background plate is fixed or moving can be determined according to the specific scene, which is not limited in this embodiment.

Step S20: collecting the facial image of the user through the second depth camera, and determining the eye three-dimensional coordinate of the user's eye under the second depth camera coordinate system based on the facial image.

It can be understood that the depth cameras configured to collect the facial image of the user are collectively referred to as the second depth camera, and the number of the second depth camera can be one or more. The eye three-dimensional coordinate can be the three-dimensional coordinate of the eye in the facial image of the user under the second depth camera coordinate system when the user stares the target object. The second depth camera can automatically obtain the three-dimensional coordinate of the eye in the image after shooting the facial image of the user. The eye three-dimensional coordinate includes the left eye three-dimensional coordinate and the right eye three-dimensional coordinate, which can be selected according to the specific scene, which is not limited in this embodiment.

Step S30: determining the object coordinate of the object three-dimensional coordinate and the eye coordinate of the eye three-dimensional coordinate under each collection camera coordinate system.

It can be understood that the collection camera can be a camera configured to collect user pictures, and includes a red, green, and blue camera (RGB camera) and an infrared camera. Determining the object coordinate of the object three-dimensional coordinate and the eye coordinate of the eye three-dimensional coordinate under each collection camera coordinate system can be transforming the object three-dimensional coordinate under the first depth camera coordinate system to each collection camera coordinate system to obtain the object coordinate under each collection camera coordinate system, and transforming the eye three-dimensional coordinate under the second depth camera coordinate system to each collection camera coordinate system to obtain the eye coordinate under each collection camera coordinate system. After the above coordinate, the object coordinate and the eye coordinate under the collection camera coordinate system corresponding to the user picture collected by each collection camera can be obtained, and the user picture collected by the collection camera can be a facial picture of the user.

step S40: determining the line-of-sight direction data of the user based on the object coordinate and the eye coordinate under each collection camera coordinate system.

It can be understood that the line-of-sight direction data of the user determined based on the object coordinate and the eye coordinate under each collection camera coordinate system can be the line-of-sight direction data corresponding to the user's picture shot through each collection camera based on the object coordinate and the eye coordinate under each collection camera coordinate system. For example, the number of collection cameras is N, and the line-of-sight direction data corresponding to N user pictures can be obtained.

In a specific implementation, the collection device is configured to collect the object image of the target object the user stares at through the first depth camera, and determine the object three-dimensional coordinate of the target object under the first depth camera coordinate system based on the target object image in the object image. The facial image of the user when staring the target object is collected through the second depth camera, and the eye three-dimensional coordinate of the eye under the second depth camera coordinate system is determined based on the eye image in the facial image. When obtaining the object three-dimensional coordinate and the eye three-dimensional coordinate through the depth camera, the facial pictures of the user are also collected through a plurality of collection cameras to obtain a plurality of facial pictures of the user. The object three-dimensional coordinate under the first depth camera coordinate system is transformed to each collection camera coordinate system to obtain a plurality of object coordinates. The eye three-dimensional coordinate under the second depth camera coordinate system is transformed to each collection camera coordinate system to obtain a plurality of eye coordinates. The line-of-sight direction data corresponding to each facial picture of the user is determined based on the object coordinate and the eye coordinate under each collection camera coordinate system.

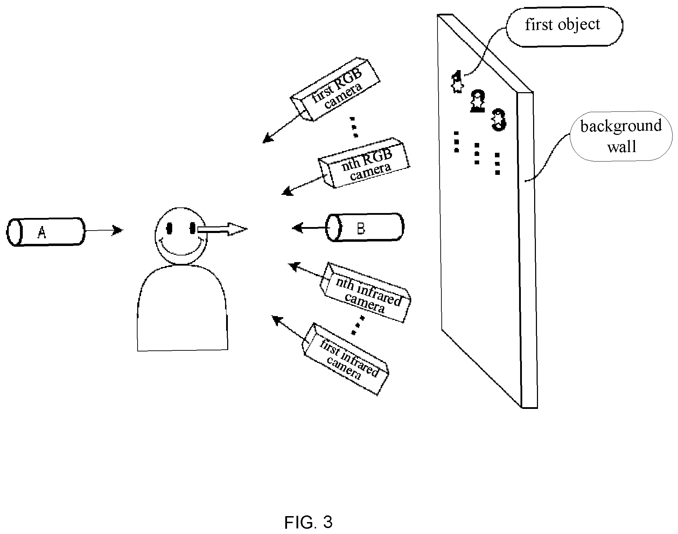

For example, referring to FIG. 3, FIG. 3 is a schematic diagram of the line-of-sight direction data collection. The number of the first depth camera and the second depth camera are both one, which are represented by A and B respectively. The first depth camera A is behind the user, and the second depth camera B is provided in front of the user. A plurality of objects for the user to stare are provided on the background wall, and the user is in front of the background wall. N collection cameras are provided between the user and the background wall, and the collection camera includes an RGB camera and an infrared camera. The collection camera is in front of the user (for example, within a range of 0.5m to 1m in front of the user), and the collection cameras are distributed within a preset angle range in front of the user (for example, the collection cameras are distributed within a range of ±45 degrees around the front of the user). The first depth camera A maintains a first preset distance from the background wall (for example, the first preset distance is set to 1.5m to 3m), and the second depth camera B maintains a second preset distance from the user (for example, the second preset distance is set to 0.5m to 1m). The depth image of the background wall is shot by the first depth camera, and the positions of the objects provided on the background wall under the first depth camera coordinate system can be determined based on the shooting depth image. The object three-dimensional coordinates under the first depth camera coordinate system are directly reused, and the object three-dimensional coordinates corresponding to each object can be directly reused later, which saves the data annotation time, and can further improve the efficiency of line-of-sight direction data collection. In response to that the target object the user stares at is the first object on the background wall, the object three-dimensional coordinates of the first object under the first depth camera coordinate system are obtained. The facial image of the user is shot through the second depth camera B, and the eye three-dimensional coordinates of the eye of the user under the second depth camera coordinate system when the user is staring at the first object are determined based on the eye image in the facial image. When collecting images through the depth camera, the facial images of N users are collected through N collection cameras, the object three-dimensional coordinates and eye three-dimensional coordinates under the coordinate systems of the depth cameras are transformed to N collection camera coordinate systems, the object coordinates and eye coordinates under the N collection camera coordinate systems are obtained, and the line-of-sight direction data corresponding to the facial images of N users are determined based on the object coordinates and eye coordinates under each collection camera coordinate system.

In an embodiment, in order to improve the accuracy of the collected line-of-sight direction data, the step S30 includes: in response to that the first depth camera coordinate system is unified with the second depth camera coordinate system, determining the object coordinate of the object three-dimensional coordinate under each collection camera coordinate system based on the external parameter matrix from the first depth camera coordinate system to each collection camera coordinate system; and determining the eye coordinate of the eye three-dimensional coordinate under each collection camera coordinate system based on the external parameter matrix from the second depth camera coordinate system to each collection camera coordinate system.

It can be understood that the external parameter matrix from the first depth camera coordinate system and the second depth camera coordinate system to each collection camera coordinate system can be obtained through external parameter calibration. The parameter matrix from the first depth camera coordinate system and the second depth camera coordinate system to each collection camera coordinate system is different.

In an embodiment, in order to improve the collection efficiency of line-of-sight direction data, the step S40 includes: determining the line-of-sight vector under each collection camera coordinate system based on the object coordinate and the eye coordinate under each collection camera coordinate system; and determining the line-of-sight direction data of the user based on the line-of-sight vector under each collection camera coordinate system.

In a specific implementation, for example, the external parameter calibration is performed between the collection camera and the second depth camera, so as to obtain an external parameter matrix (R2, T2) from the second depth camera coordinate system to each collection camera coordinate system. The external parameter calibration is performed between the collection camera and the first depth camera, so as to obtain the external parameter matrix (R1, T1) from the first depth camera coordinate system to each collection camera coordinate system. By shooting the depth image of the background wall through the first depth camera, the object three-dimensional coordinates of all objects on the background wall under the first depth camera coordinate system are obtained. In response to that the user is staring at the first object on the background wall, the object three-dimensional coordinate of the first object under the first depth camera coordinate system can be expressed as deep_cam_point1. By shooting the depth image of the user's face through the second depth camera, the three-dimensional coordinate of the user's left eye deep_cam_left_eye1 under the second depth camera coordinate system is obtained. According to the first formula, the three-dimensional coordinate under the depth camera coordinate system can be transformed to the coordinate under the collection camera coordinate system:

$$\begin{bmatrix} X\_new \\ Y\_new \\ Z\_new \end{bmatrix} = R \begin{bmatrix} X \\ Y \\ Z \end{bmatrix} + T \qquad \text{(first formula)}$$

In the formula, X, Y and Z represent the coordinates under the coordinate systems of the depth cameras, X_new, Y_new and Z_new represent the coordinates under the collection camera coordinate system, and R and T are the external parameter matrices obtained through the calibration from the depth camera coordinate system to the collection camera coordinate system. After the coordinate, the object coordinate cam_point1 of the object three-dimensional coordinate deep_cam_point1 and the left eye coordinate cam_left_eye1 of the left eye three-dimensional coordinate deep_cam_left_eye1 under each collection camera coordinate system can be obtained, and the line-of-sight direction vector of the left eye under each collection camera coordinate system can be referred to as cam_point1-cam_left_eye1.

In this embodiment, the object image of the target object is collected through the first depth camera, the object three-dimensional coordinate of the target object under the first depth camera coordinate system is determined based on the object image, and the target object is the object which the user stares at. The facial image of the user is collected through the second depth camera, and the eye three-dimensional coordinate of the user under the second depth camera coordinate system is determined based on the facial image. The object coordinate of the object three-dimensional coordinate and the eye coordinate of the eye three-dimensional coordinate under each collection camera coordinate system are determined. The line-of-sight direction data of the user is determined based on the object coordinate and the eye coordinate under each collection camera coordinate system. In this embodiment, the object image of the target object and the facial image of the user are respectively collected through the first depth camera and the second depth camera, and the object three-dimensional coordinate and the eye three-dimensional coordinate are determined based on the object image and the facial image. The object three-dimensional coordinate and the eye three-dimensional coordinate are transformed to each collection camera coordinate system, so as to obtain the object coordinate and the eye coordinate. The line-of-sight direction data is determined based on the object coordinate and the eye coordinate under each collection camera coordinate system, so that the collection range of the line-of-sight is increased to make the line-of-sight direction data more accurate, and a plurality of line-of-sight direction data can be collected each time, thereby improving the efficiency of collecting the line-of-sight direction data.

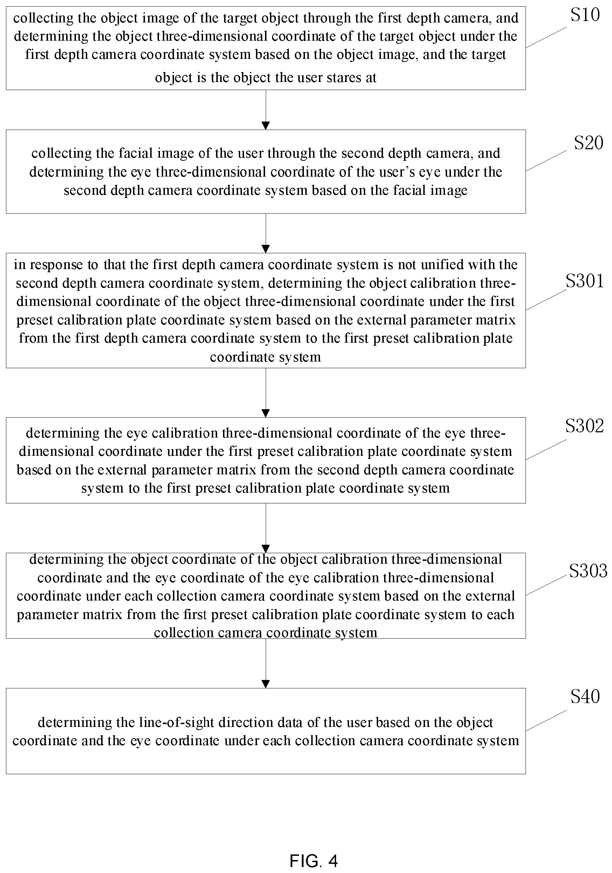

Reference FIG. 4, FIG. 4 is a flowchart of the method for collecting line-of-sight direction data according to a second embodiment of the present application.

Based on the first embodiment, in this embodiment, the step S30 includes:

step S301: in response to that the first depth camera coordinate system is not unified with the second depth camera coordinate system, determining the object calibration three-dimensional coordinate of the object three-dimensional coordinate under the first preset calibration plate coordinate system based on the external parameter matrix from the first depth camera coordinate system to the first preset calibration plate coordinate system.

It can be understood that when the first depth camera coordinate system is not unified with the second depth camera coordinate system, directly transforming the three-dimensional coordinate under the coordinate systems of the depth cameras to each collection camera coordinate system will cause the collected line-of-sight direction data to be inaccurate. The first preset calibration plate coordinate system can be the coordinate system corresponding to the preset first calibration plate.

step S302: determining the eye calibration three-dimensional coordinate of the eye three-dimensional coordinate under the first preset calibration plate coordinate system based on the external parameter matrix from the second depth camera coordinate system to the first preset calibration plate coordinate system; and

step S303: determining the object coordinate of the object calibration three-dimensional coordinate and the eye coordinate of the eye calibration three-dimensional coordinate under each collection camera coordinate system based on the external parameter matrix from the first preset calibration plate coordinate system to each collection camera coordinate system.

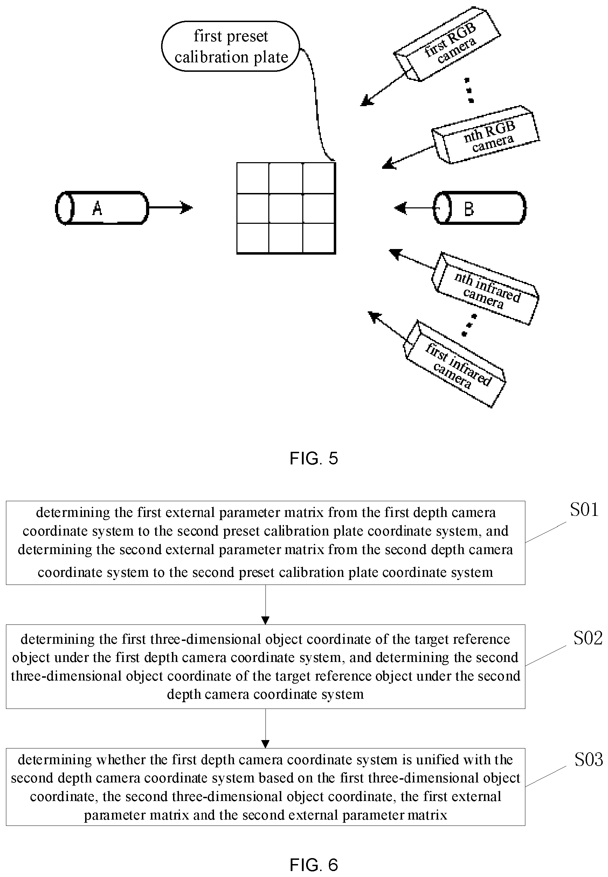

In a specific implementation, referring to FIG. 5, FIG. 5 is a schematic diagram of shooting the first preset calibration plate through the camera. The preset calibration plate is a checkerboard calibration plate, and the checkerboard calibration plate is shot through the depth camera and each collection camera. The external parameter calibration is performed between the depth camera and the checkerboard calibration plate, so as to obtain the external parameter matrix from the depth camera coordinate system to the checkerboard calibration plate coordinate system. The external parameter calibration is performed between each collection camera and the checkerboard calibration plate, so as to obtain the external parameter matrix from each collection camera coordinate system to the checkerboard calibration plate coordinate system. The object three-dimensional coordinate under the first depth camera coordinate system is transformed to the checkerboard calibration plate coordinate system through the second formula, so as to obtain the object calibration three-dimensional coordinate under the checkerboard calibration plate coordinate system. In response to that the eye three-dimensional coordinate is the left eye three-dimensional coordinate, the left eye three-dimensional coordinate under the second depth camera coordinate system is transformed to the checkerboard calibration plate coordinate system through the second formula, and the left eye calibration three-dimensional coordinate under the checkerboard calibration plate coordinate system is obtained. The object calibration three-dimensional coordinate under the checkerboard calibration plate coordinate system is transformed to each collection camera coordinate system through the first formula, and the object coordinate under each collection camera coordinate system is obtained. The left eye three-dimensional coordinate under the checkerboard calibration plate coordinate system is transformed to each collection camera coordinate system through the first formula, and the left eye three-dimensional coordinate under each collection camera coordinate system is obtained. The left eye line-of-sight direction vector can be determined based on the object coordinate and the left eye three-dimensional coordinate under each collection camera coordinate system. The determining process of the right eye line-of-sight direction vector is similar to that of the left eye line-of-sight direction vector, which will not be repeated in this embodiment.

$$\begin{bmatrix} X\_w \\ Y\_w \\ Z\_w \end{bmatrix} = R^{-1}\left(\begin{bmatrix} X\_c \\ Y\_c \\ Z\_c \end{bmatrix} - T\right) \quad \text{(second formula)}$$

In the formula, X_w, Y_w, and Z_w are three-dimensional coordinates under the checkerboard calibration plate coordinate system; and X_c, Y_c, and Z_c are coordinates under each collection camera coordinate system.

In this embodiment, when the first depth camera coordinate system is not unified with the second depth camera coordinate system, the object three-dimensional coordinate under the first depth camera coordinate system is transformed to the first preset calibration plate coordinate system, and the eye three-dimensional coordinate under the second depth camera coordinate system is transformed to the first preset calibration plate coordinate system. The coordinate under the first preset calibration plate coordinate system is transformed to each collection camera coordinate system, so as to obtain object coordinate and eye coordinate. When the coordinate systems of the depth cameras are not unified, the depth camera coordinates can be unified first and the line-of-sight direction data can be determined, thereby improving the accuracy of the collected line-of-sight direction data.

Reference FIG. 6, FIG. 6 is a flowchart of the method for collecting line-of-sight direction data according to a third embodiment of the present application.

Based on the above embodiments, in this embodiment, before the step S30, the method further includes:
step S01: determining the first external parameter matrix from the first depth camera coordinate system to the second preset calibration plate coordinate system, and determining the second external parameter matrix from the second depth camera coordinate system to the second preset calibration plate coordinate system.

It can be understood that the second preset calibration plate coordinate system can be a coordinate system corresponding to the preset second calibration plate. The first external parameter matrix from the first depth camera coordinate system to the second preset calibration plate coordinate system and the second external parameter matrix from the second depth camera coordinate system to the second preset calibration plate coordinate system can be obtained through the external parameter calibration.

step S02: determining the first three-dimensional object coordinate of the target reference object under the first depth camera coordinate system, and determining the second three-dimensional object coordinate of the target reference object under the second depth camera coordinate system.

It can be understood that the target reference object can be an object configured to determine whether the first depth camera coordinate system is unified with the second depth camera coordinate system. The first three-dimensional object coordinate can be the coordinate of the target reference object under the first depth camera coordinate system, and the second three-dimensional object coordinate can be the coordinate of the target reference object under the second depth camera coordinate system.

step S03: determining whether the first depth camera coordinate system is unified with the second depth camera coordinate system based on the first three-dimensional object coordinate, the second three-dimensional object coordinate, the first external parameter matrix and the second external parameter matrix.

In a specific implementation, the first external parameter matrix from the first depth camera to the second preset calibration plate coordinate system and the second external parameter matrix from the second depth camera to the second preset calibration plate coordinate system are respectively determined through the external parameter calibration. The first three-dimensional object coordinate of the target reference object under the first depth camera coordinate system and the second three-dimensional object coordinate of the target reference object under the second depth camera coordinate are determined respectively. The first three-dimensional object coordinate is transformed to the second preset calibration plate coordinate system based on the first external parameter matrix, and the second three-dimensional object coordinate is transformed to the second preset calibration plate coordinate system based on the second external parameter matrix. The coordinate system under the second preset calibration plate is configured to determine whether the first depth camera coordinate system is unified with the second depth camera coordinate system.

In an embodiment, in order to determine whether the coordinate systems of the depth cameras are unified, the step S02 includes: collecting the first reference object image of the target reference object through the first depth camera, and determining the first three-dimensional object coordinate of the target reference object under the first depth camera coordinate system based on the first reference object image; and collecting the second reference object image of the target reference object through the second depth camera, and determining the second three-dimensional object coordinate of the target reference object under the second depth camera coordinate system based on the second reference object image.

In an embodiment, in order to determine whether the coordinate systems of the depth cameras are unified, the step S03 includes: transforming the first three-dimensional object coordinate to the first object coordinate under the second preset calibration plate coordinate system based on the first external parameter matrix; transforming the second three-dimensional object coordinate to the second object coordinate under the second preset calibration plate coordinate system based on the second external parameter matrix; in response to that the first object coordinate is consistent with the second object coordinate, determining that the first depth camera coordinate system is unified with the second depth camera coordinate system; and in response to that the first object coordinate is inconsistent with the second object coordinate, determining that the first depth camera coordinate system is not unified with the second depth camera coordinate system.

It can be understood that the first three-dimensional object coordinate and the second three-dimensional object coordinate can be transformed to the first object coordinate and the second object coordinate through the first formula.

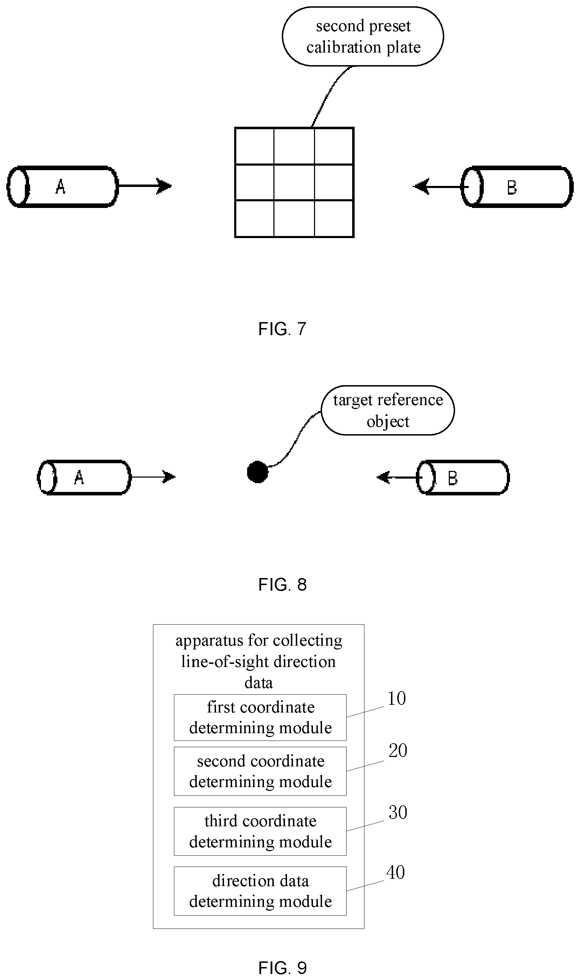

In a specific implementation, referring to FIG. 7 and FIG. 8, FIG. 7 is a schematic diagram of shooting a second preset calibration plate through the depth camera, and FIG. 8 is a schematic diagram of shooting a target reference object through the depth camera. For example, when performing unified verification to the coordinate system of the first depth camera and the second depth camera, the second preset calibration plate is shot through the first depth camera and the second depth camera, and the first external parameter matrix from the first depth camera coordinate system to the second preset calibration plate coordinate system and the second external parameter matrix from the second depth camera coordinate system to the second preset calibration plate coordinate system are obtained through the external parameter calibration. The target reference target reference object is shot through the first depth camera and the second depth camera, and the first reference object image and the second reference object image are obtained. The first three-dimensional object coordinate under the first depth camera coordinate system is determined based on the first reference image, and the second three-dimensional object coordinate under the second depth camera coordinate system is determined based on the second reference image. The object coordinate under the depth camera coordinate is transformed to the second preset calibration plate coordinate system through the first formula and the first external parameter matrix, and the first object coordinate and the second object coordinate are obtained. When the first object coordinate is consistent with the second object coordinate, the coordinate systems of the two depth cameras are determined to be unified; otherwise, the coordinate systems of the two depth cameras are determined to be not unified.

In this embodiment, the external parameter matrix from the first depth camera coordinate system to the second preset calibration plate coordinate system and the external parameter matrix from the second depth camera coordinate system to the second preset calibration plate coordinate system are determined, the three-dimensional object coordinates under the first depth camera coordinate system and the second depth camera coordinate system are transformed to the second preset calibration plate coordinate system based on the external parameter matrix. When the two object coordinates under the second preset calibration plate coordinate system are consistent, the coordinate systems of the depth cameras are determined to be unified, thereby improving the accuracy of the line-of-sight direction data of the subsequent collection while improving the unified judgment of the depth camera coordinate system.

In addition, the embodiment of the present application also provides a storage medium, on which a line-of-sight direction data collection program is stored, and when the line-of-sight direction data collection program is executed by a processor, the step of the method for collecting line-of-sight direction data described above is implemented.

Referring to FIG. 9, FIG. 9 is a structural block diagram of an apparatus for collecting line-of-sight direction data according to an embodiment of the present application.

As shown in FIG. 9, the apparatus for collecting line-of-sight direction data provided in the embodiment of the present application includes:

a first coordinate determining module 10 configured to collect the object image of the target object through the first depth camera, and determine the object three-dimensional coordinate of the target object under the first depth camera coordinate system based on the object image. The target object is the object which the user stares at;

a second coordinate determining module 20 configured to collect the facial image of the user through the second depth camera, and determine the eye three-dimensional coordinate of the user under the second depth camera coordinate system based on the facial image;

a third coordinate determining module 30 configured to determine the object coordinate of the object three-dimensional coordinate and the eye coordinate of the eye three-dimensional coordinate under each collection camera coordinate system; and

a direction data determining module 40 configured to determine the line-of-sight direction data of the user based on the object coordinate and eye coordinate under each collection camera coordinate system.

In the present application, the object image of the target object is collected through the first depth camera, and the object three-dimensional coordinate of the target object under the first depth camera coordinate system is determined based on the object image. The target object is the object which the user stares at. The facial image of the user is collected through the second depth camera, and the eye three-dimensional coordinate of the user under the second depth camera coordinate system is determined based on the facial image. The object coordinate of the object three-dimensional coordinate and the eye coordinate of the eye three-dimensional coordinate under each collection camera coordinate system are determined. The line-of-sight direction data of the user is determined based on the object coordinate and eye coordinate under each collection camera coordinate system. In the present application, the object image of the target object and the facial image of the user are respectively collected through the first depth camera and the second depth camera, and the object three-dimensional coordinate and the eye three-dimensional coordinate are determined based on the object image and the facial image. The object three-dimensional coordinate and the eye three-dimensional coordinate are transformed to each collection camera coordinate system, the object coordinate and the eye coordinate are obtained, and the line-of-sight direction data is determined based on the object coordinate and the eye coordinate under each collection camera coordinate system, so that the line-of-sight range of the collection is increased to make the line-of-sight direction data more accurate, and a plurality of line-of-sight direction data can be collected each time, thereby improving the efficiency of collecting the line-of-sight direction data.

Based on the first embodiment of the apparatus for collecting line-of-sight direction data of the present application, a second embodiment of the apparatus for collecting line-of-sight direction data of the present application is provided.

In this embodiment, the third coordinate determining module 30 is further configured to determine the object coordinate of the object three-dimensional coordinate under each collection camera coordinate system based on the external parameter matrix from the first depth camera coordinate system to each collection camera coordinate system when the first depth camera coordinate system is unified with the second depth camera coordinate system; and determine the eye coordinate of the eye three-dimensional coordinate under each collection camera coordinate system based on the external parameter matrix from the second depth camera coordinate system to each collection camera coordinate system.

The third coordinate determining module 30 is further configured to determine the object calibration three-dimensional coordinate of the object three-dimensional coordinate under the first preset calibration plate coordinate system based on the external parameter matrix from the first depth camera coordinate system to the first preset calibration plate coordinate system when the first depth camera coordinate system is not unified with the second depth camera coordinate system; determine the eye calibration three-dimensional coordinate of the eye three-dimensional coordinate under the first preset calibration plate coordinate system based on the external parameter matrix from the second depth camera coordinate system to the first preset calibration plate coordinate system; and determine the object coordinate of the object calibration three-dimensional coordinate and the eye coordinate of the eye calibration three-dimensional coordinate under each collection camera coordinate system based on the external parameter matrix from the first preset calibration plate coordinate system to each collection camera coordinate system.

The third coordinate determining module 30 is further configured to determine the first external parameter matrix from the first depth camera coordinate system to the second preset calibration plate coordinate system, and determine the second external parameter matrix from the second depth camera coordinate system to the second preset calibration plate coordinate system; determine the first three-dimensional object coordinate of the target reference object under the first depth camera coordinate system, and determine the second three-dimensional object coordinate of the target reference

## EP 4 583 052 A1

object under the second depth camera coordinate system; and determine whether the first depth camera coordinate system is unified with the second depth camera coordinate system based on the first three-dimensional object coordinate, the second three-dimensional object coordinate, the first external parameter matrix and the second external parameter matrix.

The third coordinate determining module 30 is further configured to collect the first reference object image of the target reference object through the first depth camera, and determine the first three-dimensional object coordinate of the target reference object under the first depth camera coordinate system based on the first reference object image; and collect the second reference object image of the target reference object through the second depth camera, and determine the second three-dimensional object coordinate of the target reference object under the second depth camera coordinate system based on the second reference object image.

The third coordinate determining module 30 is further configured to transform the first three-dimensional object coordinate to the first object coordinate under the second preset calibration plate coordinate system based on the first external parameter matrix; transform the second three-dimensional object coordinate to the second object coordinate under the second preset calibration plate coordinate system based on the second external parameter matrix; determine that the first depth camera coordinate system is unified with the second depth camera coordinate system when the first object coordinate is consistent with the second object coordinate; and determine that the first depth camera coordinate system is not unified with the second depth camera coordinate system when the first object coordinate is inconsistent with the second object coordinate.

The direction data determining module 40 is further configured to determine the line-of-sight vector under each collection camera coordinate system based on the object coordinate and eye coordinate under each collection camera coordinate system; and determine the line-of-sight direction data of the user based on the line-of-sight vector under each collection camera coordinate system.

Other embodiments or specific implementations of the apparatus for collecting line-of-sight direction data of the present application can refer to the above-mentioned method embodiments, which will not be repeated here.

It should be noted that, in the present application, the terms "include", "comprise" or any other variants thereof are intended to cover non-exclusive inclusion, so that a process, method, article or system including a series of elements includes not only those elements, but also other elements not explicitly listed, or also includes elements inherent to such process, method, article or system. **In** the absence of further restrictions, an element defined by the sentence "includes one..." does not exclude the existence of other identical elements in the process, method, article or system including the element.

The above-mentioned serial numbers of the embodiments of the present application are only for description and do not represent the advantages and disadvantages of the embodiments.

Through the description of the above implementation methods, those skilled in the art can clearly understand that the above-mentioned embodiment method can be implemented by means of software plus a necessary general hardware platform. Of course, it can also be implemented by hardware, but in many cases the former is a better implementation method. Based on this understanding, the technical solution of the present application, or the part that contributes to the prior art, can be embodied in the form of a software product. The computer software product is stored in a storage medium (such as a read-only memory/random access memory, a disk, or an optical disk), and includes several instructions for a terminal device (which can be a mobile phone, a computer, a server, an air conditioner, or a network device, etc.) to execute the methods described in each embodiment of the present application.

The above are only embodiments of the present application, and do not limit the scope of the present application. Any equivalent structure or equivalent process transformation made using the contents of the description and drawings of the present application, or directly or indirectly used in other related technical fields, are also included in the scope of the present application.

### Claims

1. A method for collecting line-of-sight direction data, **characterized by** comprising:

collecting an object image of a target object through a first depth camera, and determining an object three-dimensional coordinate of the target object under a first depth camera coordinate system based on the object image, wherein the target object is an object a user stares at;
collecting a facial image of the user through a second depth camera, and determining an eye three-dimensional coordinate of the user under a second depth camera coordinate system based on the facial image;
determining an object coordinate of the object three-dimensional coordinate and an eye coordinate of the eye three-dimensional coordinate under each collection camera coordinate system; and
determining line-of-sight direction data of the user based on the object coordinate and the eye coordinate under each collection camera coordinate system.

2. The method according to claim 1, wherein the determining the object coordinate of the object three-dimensional coordinate and the eye coordinate of the eye three-dimensional coordinate under each collection camera coordinate system comprises:

in response to that the first depth camera coordinate system is unified with the second depth camera coordinate system, determining the object coordinate of the object three-dimensional coordinate under each collection camera coordinate system based on an external parameter matrix from the first depth camera coordinate system to each collection camera coordinate system; and
determining the eye coordinate of the eye three-dimensional coordinate under each collection camera coordinate system based on an external parameter matrix from the second depth camera coordinate system to each collection camera coordinate system.

3. The method according to claim 1, wherein the determining the object coordinate of the object three-dimensional coordinate and the eye coordinate of the eye three-dimensional coordinate under each collection camera coordinate system further comprises:

in response to that the first depth camera coordinate system is not unified with the second depth camera coordinate system, determining an object calibration three-dimensional coordinate of the object three-dimensional coordinate under a first preset calibration plate coordinate system based on the external parameter matrix from the first depth camera coordinate system to the first preset calibration plate coordinate system;
determining an eye calibration three-dimensional coordinate of the eye three-dimensional coordinate under the first preset calibration plate coordinate system based on the external parameter matrix from the second depth camera coordinate system to the first preset calibration plate coordinate system; and
determining an object coordinate of the object calibration three-dimensional coordinate and an eye coordinate of the eye calibration three-dimensional coordinate under each collection camera coordinate system based on an external parameter matrix from the first preset calibration plate coordinate system to each collection camera coordinate system.

4. The method according to any one of claims 1 to 3, wherein before the determining the object coordinate of the object three-dimensional coordinate and the eye coordinate of the eye three-dimensional coordinate under each collection camera coordinate system, the method further comprises:

determining a first external parameter matrix from the first depth camera coordinate system to a second preset calibration plate coordinate system, and determining a second external parameter matrix from the second depth camera coordinate system to the second preset calibration plate coordinate system;
determining a first three-dimensional object coordinate of a target reference object under the first depth camera coordinate system, and determining a second three-dimensional object coordinate of the target reference object under the second depth camera coordinate system; and
determining whether the first depth camera coordinate system is unified with the second depth camera coordinate system based on the first three-dimensional object coordinate, the second three-dimensional object coordinate, the first external parameter matrix and the second external parameter matrix.

5. The method according to claim 4, wherein the determining the first three-dimensional object coordinate of the target reference object under the first depth camera coordinate system, and determining the second three-dimensional object coordinate of the target reference object under the second depth camera coordinate system comprises:

collecting a first reference object image of the target reference object through the first depth camera, and determining the first three-dimensional object coordinate of the target reference object under the first depth camera coordinate system based on the first reference object image; and
collecting a second reference object image of the target reference object through the second depth camera, and determining the second three-dimensional object coordinate of the target reference object under the second depth camera coordinate system based on the second reference object image.

6. The method according to claim 5, wherein the determining whether the first depth camera coordinate system is unified with the second depth camera coordinate system based on the first three-dimensional object coordinate, the second three-dimensional object coordinate, the first external parameter matrix and the second external parameter matrix comprises:

transforming the first three-dimensional object coordinate to a first object coordinate under the second preset calibration plate coordinate system based on the first external parameter matrix;

transforming the second three-dimensional object coordinate to a second object coordinate under the second preset calibration plate coordinate system based on the second external parameter matrix;

in response to that the first object coordinate is consistent with the second object coordinate, determining that the first depth camera coordinate system is unified with the second depth camera coordinate system; and

in response to that the first object coordinate is inconsistent with the second object coordinate, determining that the first depth camera coordinate system is not unified with the second depth camera coordinate system.

7. The method according to any one of claims 1 to 3, wherein the determining the line-of-sight direction data of the user based on the object coordinate and the eye coordinate under each collection camera coordinate system comprises:

determining a line-of-sight vector under each collection camera coordinate system based on the object coordinate and the eye coordinate under each collection camera coordinate system; and

determining the line-of-sight direction data of the user based on the line-of-sight vector under each collection camera coordinate system.

8. An apparatus for collecting line-of-sight direction data, **characterized by** comprising:

a first coordinate determining module configured to collect an object image of a target object through a first depth camera, and determine an object three-dimensional coordinate of the target object under a first depth camera coordinate system based on the object image, wherein the target object is an object a user stares at;

a second coordinate determining module configured to collect a facial image of the user through a second depth camera, and determine an eye three-dimensional coordinate of the user under a second depth camera coordinate system based on the facial image;

a third coordinate determining module configured to determine an object coordinate of the object three-dimensional coordinate and an eye coordinate of the eye three-dimensional coordinate under each collection camera coordinate system; and

a direction data determining module configured to determine line-of-sight direction data of the user based on the object coordinate and the eye coordinate under each collection camera coordinate system.

9. A device for collecting line-of-sight direction data, **characterized by** comprising: a memory, a processor, and a line-of-sight direction data collection program stored in the memory and executable on the processor, wherein the line-of-sight direction data collection program is configured to implement steps of the method for collecting line-of-sight direction data according to any one of claims 1 to 7.

10. A storage medium, wherein a line-of-sight direction data collection program is stored on the storage medium, and when the line-of-sight direction data collection program is executed by a processor, steps of the method for collecting line-of-sight direction data according to any one of claims 1 to 7 are implemented.

1001

1005

1002

processor

| operating system |
| network communication module |
| user interface module |
| line-of-sight direction data collection program |

memory

1003

1004

| user interface |

| network interface |

FIG. 1

collecting the object image of the target object through the first depth camera, and determining the object three-dimensional coordinate of the target object under the first depth camera coordinate system based on the object image, and the target object is the object the user stares at — S10

collecting the facial image of the user through the second depth camera, and determining the eye three-dimensional coordinate of the user's eye under the second depth camera coordinate system based on the facial image — S20

determining the object coordinate of the object three-dimensional coordinate and the eye coordinate of the eye three-dimensional coordinate under each collection camera coordinate system — S30

determining the line-of-sight direction data of the user based on the object coordinate and the eye coordinate under each collection camera coordinate system — S40

FIG. 2

FIG. 3

collecting the object image of the target object through the first depth camera, and determining the object three-dimensional coordinate of the target object under the first depth camera coordinate system based on the object image, and the target object is the object the user stares at

S10

collecting the facial image of the user through the second depth camera, and determining the eye three-dimensional coordinate of the user's eye under the second depth camera coordinate system based on the facial image

S20

in response to that the first depth camera coordinate system is not unified with the second depth camera coordinate system, determining the object calibration three-dimensional coordinate of the object three-dimensional coordinate under the first preset calibration plate coordinate system based on the external parameter matrix from the first depth camera coordinate system to the first preset calibration plate coordinate system

S301

determining the eye calibration three-dimensional coordinate of the eye three-dimensional coordinate under the first preset calibration plate coordinate system based on the external parameter matrix from the second depth camera coordinate system to the first preset calibration plate coordinate system

S302

determining the object coordinate of the object calibration three-dimensional coordinate and the eye coordinate of the eye calibration three-dimensional coordinate under each collection camera coordinate system based on the external parameter matrix from the first preset calibration plate coordinate system to each collection camera coordinate system

S303

determining the line-of-sight direction data of the user based on the object coordinate and the eye coordinate under each collection camera coordinate system

S40

FIG. 4

FIG. 5

| |
| --- |
| determining the first external parameter matrix from the first depth camera coordinate system to the second preset calibration plate coordinate system, and determining the second external parameter matrix from the second depth camera coordinate system to the second preset calibration plate coordinate system |

S01

| |
| --- |
| determining the first three-dimensional object coordinate of the target reference object under the first depth camera coordinate system, and determining the second three-dimensional object coordinate of the target reference object under the second depth camera coordinate system |

S02

| |
| --- |
| determining whether the first depth camera coordinate system is unified with the second depth camera coordinate system based on the first three-dimensional object coordinate, the second three-dimensional object coordinate, the first external parameter matrix and the second external parameter matrix |

S03

FIG. 6

second preset
calibration plate

A →

← B

FIG. 7

target reference
object

A →

← B

FIG. 8

apparatus for collecting
line-of-sight direction
data

| first coordinate determining module | 10 |
| second coordinate determining module | 20 |
| third coordinate determining module | 30 |
| direction data determining module | 40 |

FIG. 9

## INTERNATIONAL SEARCH REPORT

| International application No. |
|---|
| **PCT/CN2023/111752** |

### A. CLASSIFICATION OF SUBJECT MATTER

G06T7/80(2017.01)i; G06T7/73(2017.01)i

According to International Patent Classification (IPC) or to both national classification and IPC

### B. FIELDS SEARCHED

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

VEN, CNTXT, USTXT, DWPI, CNKI, IEEE: 眼, 脸, 面, 物, 坐标, 视线, 注视, eye, face, object, coordinate, line, sight, gaze

### C. DOCUMENTS CONSIDERED TO BE RELEVANT

| Category* | Citation of document, with indication, where appropriate, of the relevant passages | Relevant to claim No. |
|---|---|---|
| PX | CN 115588052 A (ZHEJIANG ZEEKR INTELLIGENT TECHNOLOGY CO., LTD. et al.) 10 January 2023 (2023-01-10) claims 1-10 | 1-10 |
| X | CN 113553920 A (BLACK SESAME INTELLECTUAL TECHNOLOGY SHANGHAI CO., LTD.) 26 October 2021 (2021-10-26) description, paragraphs [0024]-[0025] and [0040]-[0108] | 1-10 |
| A | CN 106598221 A (UNIVERSITY OF ELECTRONIC SCIENCE AND TECHNOLOGY OF CHINA) 26 April 2017 (2017-04-26) entire document | 1-10 |
| A | CN 108171152 A (SHENZHEN UNIVERSITY) 15 June 2018 (2018-06-15) entire document | 1-10 |
| A | US 2020305712 A1 (AISIN SEIKI KABUSHIKI KAISHA) 01 October 2020 (2020-10-01) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 October 2023** | **02 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/111752**

| Patent document cited in search report | | | Publication date (day/month/year) | Patent family member(s) | | | Publication date (day/month/year) |
|---|---|---|---|---|---|---|---|
| CN | 115588052 | A | 10 January 2023 | None | | | |
| CN | 113553920 | A | 26 October 2021 | None | | | |
| CN | 106598221 | A | 26 April 2017 | None | | | |
| CN | 108171152 | A | 15 June 2018 | None | | | |
| US | 2020305712 | A1 | 01 October 2020 | JP | 2020162759 | A | 08 October 2020 |
| | | | | EP | 3725211 | A2 | 21 October 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211305842